**Europäisches Patentamt**

**European Patent Office**

**Office européen des brevets**

(11) Publication number: **0 092 714**
**B1**

(12) **EUROPEAN PATENT SPECIFICATION**

(45) Date of publication of patent specification: **12.08.87**

(21) Application number: **83103417.8**

(22) Date of filing: **08.04.83**

(51) Int. Cl.⁴: **F 16 K 37/00**

(54) Position indicator assembly and valve assembly making use thereof.

(30) Priority: **09.04.82 US 367038**

(43) Date of publication of application:
**02.11.83 Bulletin 83/44**

(45) Publication of the grant of the patent:
**12.08.87 Bulletin 87/33**

(84) Designated Contracting States:
**AT BE CH DE FR GB IT LI LU NL SE**

(56) References cited:
**EP-A-0 045 127**
**AT-B- 43 335**
**CH-A- 520 297**
**DE-A-3 120 171**
**US-A-2 485 942**
**US-A-3 238 915**
**US-A-3 238 968**

(73) Proprietor: **Westlock Control Corporation**
**175 Andersen Avenue**
**Moonachie, N.J. 07074 (US)**

(72) Inventor: **Sinclair, Franklin H.**
**238 Meritt Drive**
**Oradell N.J. 07649 (US)**
Inventor: **Glockner, Gary**
**172 Mountain View Terr.**
**Hillsdale N.J. 07205 (US)**

(74) Representative: **LOUIS, PÖHLAU, LOHRENTZ & SEGETH**
**Kesslerplatz 1 P.B. 3055**
**D-8500 Nürnberg (DE)**

Courier Press, Leamington Spa, England.

## Description

This invention relates to a position indicator assembly for use with a rotary valve visual indicating operational setting of a rotary valve having a first operational position and a second operational position corresponding to an open position and a closed position with respect to fluid flow, respectively, and provided with an actuator assembly for placing said rotary valve in said operational positions, comprising a cylindrically shaped indicator member having first and second surface sections, said first surface section being provided with a first indicator means referenced to said first operational position and said second surface section being provided with a second indicator means referenced to said second operational position, said indicator member being connected to said actuator assembly of said rotary valve, and comprising a cylindrically shaped housing member having third and fourth surface sections one of which being a translucent section mounted about said indicator member, said first surface section of said indicator member being visible through said translucent section when said actuator assembly is in said first operational position and said second surface section of said indicator member being visible through said translucent section when said actuator assembly is in said second position.

Rotary valves, such as butterfly valves, have been provided with external indicators permitting visual observation of the relative operational positioning of the disk of the valve wherein the rotatable spindle to which the disk is mounted is actuated through a driven gear and a driving worm gear mounted on a shaft connected to a handle wheel of the valve assembly. Generally, visual observation of the operational positioning of the spindle of such a valve assembly requires relatively close visual inspection, e.g. 1.5 to 3 m, and in particular from that side of the assembly valve on which the driving gear therefor is disposed. Thus, in the event of a disabling condition of the plant in which such valve assembly is included, it would be necessary to require operating personnel to come into close proximity to each such valve assembly to ascertain operational setting thereby possibly exposing such operating personnel to dangerous and hazardous situations.

An indicator assembly according to the preamble of claim 1 is, for instance, known from US—A—3 238 915. There, the translucent portions of the housing member of the indicator assembly permit observation of words "open" or "shut" or an indicator thereof in response to positioning of the valve. This indicator means functions in their own right to illustrate valve positioning and does not cooperate with indicator means of an indicator section of the handle portion to illustrate positioning of the valve.

The US—A—2 485 942 shows a valve position indicator. Said indicator comprises a plurality of vanes, one held fixed with the valve bonnet and the other responsive to the valve stem movement, the respective sets of vanes being particularly formed so that a vane carried by the valve stem will, in one position of the valve, be superimposed on one side of the fixed vane and in another position of the valve will be superimposed on the other side of the fixed vane, with the respective vanes having relatively different markings, as for example, different colours, on their respective sides to indicate the position of the valve by the markings of the exposed vane surfaces following a particularly valve operation. In the extreme positions of said indicator the exposed surfaces of the vanes are provided with similar indicia, or colour, so that the indicia is clearly visible from both above and below the valve and will indicate the position of the valve. The signal thus cooperates with both normally positioned and overhead valves. Said vanes are arranged in parallel to each other so that it is impossible to visually indicate the operational setting thereof from a direction which is in alignment with the plane of the vanes.

From the US—A—3 238 968 there is known a colour indicator for push-pull faucet indicating the temperature of the water delivered to the faucet. The faucet handle assembly comprises a body portion. This body portion is made of transparent plastic and has an interior recessed portion arcuately cut away on one side thereof. This portion is cut away in an arc equal to a full extent to which the handle may be rotated, from extreme cold or extreme hot. An interior boss, on the under side of the upper surface of the body portion protrudes downwardly and has an opening therein to receive the valve stem. A colour plate is provided in the interior of the body portion and has the skirt portion which surrounds the boss on the under side of the body portion. This colour plate is held in rotating engagement with the boss and is retained in position by means of snap ring. The colour plate has a depending arm, which is received in and held stationary by an opening in the valve body. The upper portion of the colour plate has its surface abraded and stained, for example red on one side and blue on the other side. The junction of these two colours forms an arc across the surface of this plate. An opaque plate fits within the recess on the upper surface of the body portion of the handle assembly. This opaque plate has a window therein and has a central opening. This permits a visual indication of the amount of hot and cold water being discharged from the faucet and does not require close examination to read the directions on the cover plate. With such an arrangement it is only possible to indicate the operational position of the faucet from a relatively small space angle which is defined by the window in the opaque plate.

The object of the present invention is to improve indication of the operational setting of rotary valves and to permit instant visual indication of the operational setting thereof from remote distances and from all directions.

This object of the present invention is achieved in that said third surface section is an indicator section, said indicator section of said housing member being provided with an indicator means which is a checker board-type arrangement for visually cooperating with one of said indicator means of said indicator member, which is an equivalent checker board-type arrangement to indicate an operational position of said rotary valve; said indicator means of the checker board-type arrangements are differing colours; a first colour of said first surface section corresponds to said first operational position and a second colour of said second surface section corresponds to said second operational position and said housing member other than said translucent section is of a colour corresponding to said second colour; said first surface section and said second surface section of said indicator member are comprised of opposed radial surface portions of approximately 90°, and said translucent section is comprised of opposed radial surface portions of about 90°; and in that said indicator member is divided into an upper and lower hemi-cylindrical portion with first surface sections on said upper hemi-cylindrical portion being offset by 90° from first surface sections on said lower hemi-cylindrical portion and wherein said housing member is divided into an upper hemi-portion and a lower hemi-portion with opposed translucent radial surfaces on said upper hemi-portion being offset by 90° from opposed translucent radial surfaces on said lower hemi-portion.

The invention permits instant a far visual indication of the operational setting of the fluid handling apparatus to reduce operating personnel exposure to potential dangerous and/or hazardous conditions.

Further advantageous features of the invention are stated in the subclaim.

A better understanding of the present invention as well as other objects and advantages thereof will become apparent upon consideration of the detailed disclosure thereof, especially when taken with the accompanying drawings, wherein

Figure 1 is an elevational view, partially cut away, of the indicator assembly of the present invention mounted on a fluid handling apparatus;

Figure 2 is a side view, partially cut away, of the indicator assembly of Figure 1;

Figure 3 is an enlarged partial cross-sectional view of the indicator assembly of the present invention; and

Figure 4 is an exploded view of the major components of the indicator assembly of the present invention.

Referring now to the drawing, there is illustrated an indicator assembly of the present invention, generally indicated as 10, mounted on an actuator assembly associated with and driving a valve assembly, generally indicated as 12 and 14, respectively.

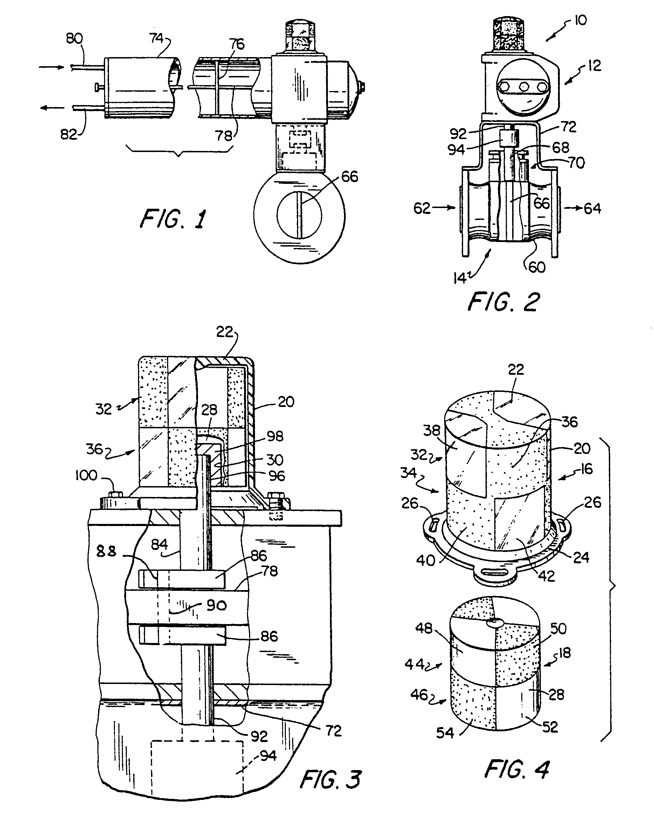

The indicator assembly 10 is comprised of a cylindrically-shaped housing member 16 in which disposed for rotation there is positioned a cylindrically-shaped indicator member 18, referring particularly to Fig. 4. The cylindrically-shaped housing member 16 is formed by a cylindrically-shaped side wall 20 enclosed by a top end wall 22 and including a disk-shaped outwardly-extending mounting ring member 24 including mounting orifices or holes 26 formed opposite the top end wall 22 thereof. The cylindrically-shaped indicator member 18 is formed of a cylindrically-shaped solid body member 28 including a rectangularly-shaped chamber 30 in a bottom end portion thereof, more clearly shown in Figure 3.

The indicator assembly 10 of the present invention may be formed of any suitable material given the prerequisite visual characteristics and conditions to which the indicator assembly 10 may be subjected during use. Generally, the housing member 16 and indicator member 18 of the indicator assembly 10 are formed of a thermoplastic material, such as plexiglas, polycarbonates or the like; materials exhibiting resistance to high temperatures and excellent mechanical and chemical properties. Preferably, the housing member 16 is formed of transparent or translucent thermoplastic material for visual acuity, as will become apparent to one skilled in the art.

As herein above mentioned, the respective parts of the indicator assembly 10 are provided with selectively-deposited layers of a paint or pigment material, decal or the like, referring more particularly to Fig. 4. Selective deposition of the paint or pigment material, is preferably coated on the interior surface of the side wall 20 of the housing member 16 divided into an hemicylindrically-shaped upper portion and a hemicylindrically-shaped lower portion, generally indicated as 32 and 34, respectively, however, processing limitations may require coating on the exterior surface thereof. The paint or pigment material in the upper portion 32 is deposited about opposed radial surface portion 36 of the inner surface of the side wall 20 thereby leaving the remaining opposed surface 38 transparent, with the paint or pigment material in the hemicylindrically-shaped lower portion 34 being deposited about opposed radial surface portions 40 of the interior surface of the wall 20 thereby leaving the remaining opposed surface portions 42 transparent. The opposed radial surface portions 36 and 40 cover a radial surface slightly greater than 90° thereby leaving the transparent radial portion 38 and 42 of a radial surface slightly less than 90° as will be more fully hereafter understood. A plane (not shown) coaxially-disposed to the axis of the housing member 16 through a midpoint of each radial surface portions 36 of the hemicylindrically-shaped upper portion 32 is perpendicularly disposed to a plane (not shown) coaxially-disposed to the axis of the housing member 16 through a midpoint of each radial surface portion 40 of the hemispherically-shaped lower portion 34 of the housing member 16.

The indicator member 18 is divided for selective deposition of a paint or pigment material decal or the like into a hemicylindrically-shaped upper portion and a hemicylindrically-shaped lower portion, generally indicated as 44 and 46, respectively, with the upper and lower portions 44 and 46 being further divided in opposed 90° radial surface sections 48 and 50, and 52 and 54, respectively, referring specifically to Figure 4. A plane (not shown) coaxially-disposed to the axis of the indicator member 18 through a midpoint of the opposed radial surface sections 48 is perpendicularly-disposed to a plane (not shown) coaxially-disposed to the axis of the indicator member 18 through a midpoint of the opposed radial surface section 50, as is a plane (not shown) coaxially-disposed to the axis of the indicator member 18 through a midpoint of the opposed radial surface section 52 to a plane (not shown) coaxially-disposed to the axis of the indicator memeber 18 of the opposed radial surface sections 54. The plane of the opposed radial surface sections 48 and the plane of the opposed radial surface sections 54 is coplanar as is the plane of the opposed radial surface sections 50 and the plane of the opposed radial surface sections 54 of the upper and lower hemicylindrically-shaped portions 44 and 46, respectively.

Any color of paint or pigment material, decal or the like may be used. In this context, the color coding may reflex reference to the Ansi Standard for piping system, e.g. yellow-hazardous; green-liquid material slightly hazardous; blue-gaseous material slightly hazardous; and red-fire quenching. In the present invention a desired color of paint, for example yellow, is applied to the side wall 20 about surface portions 36 and 40 of the housing member 16. With a predetermined color confirmation being selected for the fluid handling apparatus to which the present invention is to be mounted, e.g., all yellow to indicate a closed valve configuration and checkerboard to indicate an opened valve configuration, the required paint or pigment material is applied to the indicator member 18 to the opposed radial surface sections 48 and 52, i.e. yellow with a contrasting color of paint or pigment material, e.g. black being applied to the radial surface sections 50 and 54.

As illustrated in Figures 1 to 3, the indicator assembly of the present invention is to be associated with a valve assembly 14 under the control of a pneumatic actuator assembly 12. The valve assembly 14 is comprised of a valve housing 60 including inlet and outlet ends, 62 and 64, respectively, a valve disk 66 and a valve spindle 68 for mounting the valve disk 66. The valve housing 60 is formed with a valve spindle packing assembly, generally indicated as 70, to permit rotation of the valve spindle 68 under fluid tight conditions.

On the valve assembly 60, there is provided a bracket 72 for mounting the actuator assembly 12. The actuator assembly 12 is comprised of a cylinder housing 74 and a piston 76 mounted for reciprocal movement therein by a cylinder rod 78, and is provided with a fluid inlet line 80 and a fluid outlet line 82. The cylindrical housing 74 of the actuator assembly 12 is provided with a valve rod 84, referring to Figure 3, at an end portion thereof extending through the side wall of the cylinder housing 74 positioned for rotation about 90° in bearing members (not shown) on an axis generally perpendicular to the axis of the cylinder rod 78. Arm members 86 are mounted on the valve rod 84 above and below the cylinder rod 78 and are connected to the cylinder rod 78 by a pin member 88 disposed in a shaft 90 formed in the cylinder rod 78. A portion 92 of the valve rod 84 of the actuator assembly 12 extending downwardly through the cylinder housing 74 is mounted by connecting element 94 to the valve spindle 68, as more clearly illustrated in Figure 2. A portion 96 of the valve rod 84 of the actuator assembly 12 extending upwardly through the cylinder housing 74 is flattened for use as the means for connecting the indicator member 18 of the indicator assembly 10 to the pneumatic actuator assembly 12.

Referring now to Figure 3, on the valve rod 84, there is provided a rectangular U-shaped member 98 disposed on the flattened portion 96 of valve rod 84 whereby the U-shaped member 98 is caused to rotate with rotation of the valve spindle 66 via the connecting element 94 and valve rod 84. Over the member 98, there is positioned the indicator member 18 of the indicator assembly 10, such that the member 98 is disposed within the rectangularly-shaped chamber 30 of the indicator member 18. In Figure 1, the valve disk 66 of the valve assembly 14 is disposed in an opened position within the valve housing 60. The indicator housing 16 is thereafter mounted, such as by screws 100, to the actuator assembly 12 in a manner such that the radial surface sections 48 and 52 of the indicator member 18 are fully visible through the transparent or translucent portions 38 and 42 of the indicator assembly 12 (housing member), as more closely illustrated in Figure 1, to provide a checker-board visual representation of the positioning of the valve spindle 68 and thus the valve disk 66; i.e. the valve assembly 14 being in an opened mode.

In operation, referring now to Figure 1 and 3, the valve disk 66 and thus valve spindle 68 of the valve housing 60 being in an open position thereby permits a flow of fluid through the valve housing 60 from the inlet 62 to the outlet 64. In such operational position, the color of the paint of the radial surface sections 50 and 54 of the indicator member 18 (a color visually and significantly different from the color of the paint on the radial surface sections 48 and 52 thereof), is visually observed through the transparent radial portions 38 and 42 of the housing member 16 thereby illustrating a checkerboard configuration indicative of an opened processing mode of the valve assembly 14.

Placing the inlet conduit 80 of the actuator assembly 12 in fluid communication with the downstream side of the compressor (not shown), places the chamber portion of the actuator cylinder 74 in fluid communication therewith to cause the cylinder piston 76 to be displaced to the right and thus the piston rod 78 to thereby cause rotation of the valve rod 84 through 90° by rotation of the arm members 84. Rotation of the valve rod 84 correspondingly rotates through 90° the valve disk 66 via the valve spindle 68 and connecting element 94 with concommittant counterclockwise rotation through 90° of the indicator member 18 to thereby align the radial surface sections 48 and 52 thereof with the transparent radial portions 38 and 42 of the housing member 16 thereby to visually indicate, by essentially a one-color display, the representation that the valve disk 66 of the valve assembly 14 is in a position to prevent fluid flow through the valve assembly 14, as illustrated in Figure 2, i.e. closed.

## Claims

1. A position indicator assembly (10) for use with a rotary valve visual indicating operational setting of a rotary valve (14) having a first operational position and a second operational position corresponding to an open position and a closed position with respect to fluid flow, respectively, and provided with an actuator assembly (12) for placing said rotary valve in said operational positions, comprising a cylindrically shaped indicator member (18) having first and second surface sections (48, 52; 50, 54), said first surface section (48, 52) being provided with a first indicator means referenced to said first operational position and said second surface section (50, 54) being provided with a second indicator means referenced to said second operational position, said indicator member (18) being connected to said actuator assembly (12) of said rotary valve, and comprising a cylindrically shaped housing member (16) having third and fourth surface sections (36, 40; 38, 42) one of which being a translucent section (38, 42) mounted about said indicator member (18), said first surface section (48, 52) of said indicator member (18) being visible through said translucent section (38, 42) when said actuator assembly (12) is in said first operational position and said second surface section (50, 54) of said indicator member (18) being visible through said translucent section (38, 42) when said actuator assembly (12) is in said second position, characterized in that said third surface section (36, 40) is an indicator section, said indicator section (36, 40) of said housing member (16) being provided with an indicator means which is a checker board-type arrangement for visually cooperating with one of said indicator means (54, 50) or (52, 48) of said indicator member (18), which is an equivalent checker board-type arrangement to indicate an operational position of said rotary valve; said indicator means of the checker board-type arrangements are differing colours; a first colour of said first surface section (48, 52) corresponds to said first operational position and a second colour of said second surface section (50, 54) corresponds to said second operational position and said housing member (16) other than said translucent section (38, 42) is of a colour corresponding to said second colour; said first surface section (48, 52) and said second surface section (50, 54) of said indicator member (18) are comprised of opposed radial surface portions of approximately 90°, and said translucent section (38, 42) is comprised of opposed radial surface portions of about 90°; and in that said indicator member (18) is divided into an upper and lower hemicylindrical portion (44, 46) with first surface sections (48) on said upper hemi-cylindrical portion (44) being offset by 90° from first surface sections (52) on said lower hemi-cylindrical portion (46) and wherein said housing member (16) is divided into an upper hemi-portion (32) and a lower hemi-portion (34) with opposed translucent radial surfaces (38) on said upper hemi-portion (32) being offset by 90° from opposed translucent radial surfaces (42) on said lower hemi-portion (34).

2. A valve assembly comprising a valve housing (60); a valve spindle (68) disposed in said valve housing (60); a valve disk (66) mounted for rotation on said valve spindle (68) between an opened and closed fluid flow position; and an indicator assembly (20) as defined in claim 1, wherein said indicator member (18) is connected to said valve spindle (68) in such a way that said first checker board-type arranged surface sections (48, 52) of said indicator member (18) is visible through said translucent section (38, 42) when said valve spindle (68) is in said first operational position and said second checker board-type arranged surface section (50, 54) of said indicator member (18) is visible through said translucent checker board-type arranged section (38, 42) when said valve spindle (68) is in said second position.

## Patentansprüche

1. Stellung-Anzeigevorrichtung (10) zur Verwendung mit einem Drehventil zur sichtbaren Anzeige der Betriebsstellung des Drehventils (14), welche eine erste Betriebsstellung und eine zweite Betriebsstellung entsprechend einer geöffneten und einer verschlossenen Stellung für die Strömung eines Strömungsmittels aufweist und welche zur Einstellung des Drehventils in die Betriebsstellung mit einer Betätigungsvorrichtung (12) versehen ist, die ein zylinderförmiges Anzeigeelement (18) mit einem ersten und einem zweiten Flächenabschnitt (48, 52; 50, 54) aufweist, wobei der erste Flächenabschnitt (48, 52) mit einer ersten auf die erste Betriebsstellung hinweisenden Anzeigeeinrichtung und der zweite Flächenabschnitt (50, 54) mit einer zweiten auf die zweite Betriebsstellung hinweisenden Anzeigeeinrichtung versehen ist, wobei das Anzeigeelement (18) mit der Betätigungsvorrichtung (12) des Drehventils verbunden ist, und welche ein zylinderförmiges Gehäuseelement (16) mit einem dritten und einem vierten Flächenabschnitt (36, 40; 38, 42) aufweist, von denen einer ein durchscheinender Abschnitt (38, 42) ist, der um das Anzeigeelement (18) herum angeordnet ist, wobei der erste Flächenabschnitt (48, 52) des Anzeigeelements (18) durch den durchscheinenden Abschnitt (38, 42) hindurch sichtbar ist, wenn die Betätigungsvorrichtung (12) sich in der ersten Betriebsstellung befindet und der zweite Flächenabschnitt (50, 54) des Anzeigeelementes (18) durch den durchscheinenden Abschnitt (38, 42) hindurch sichtbar ist, wenn die Betätigungsvorrichtung (12) sich in der zweiten Betriebsstellung befindet, dadurch gekennzeichnet, dass der dritte Flächenabschnitt (36, 40) ein Anzeigeabschnitt ist, dass der Anzeigeabschnitt (36, 40) des Gehäuseelementes (16) mit einer Anzeigeeinrichtung versehen ist, bei der es sich um eine schachbrettartige Anordnung zum sichtbaren Zusammenwirken mit einer der Angzeigeeinrichtungen (54, 50) oder (52, 48) des Anzeigeelements (18) handelt, das zur Anzeige einer Betriebsstellung des Drehventils eine äquivalente schachbrettartige Anordnung aufweist, dass die Anzeigeeinrichtungen der schachbrettartigen Anordnungen unterschiedlich gefärbt sind, wobei eine erste Farbe des ersten Flächenabschnittes (48, 52) der ersten Betriebsstellung und eine zweite Farbe des zweiten Flächenabschnittes (50, 54) der zweiten Betriebsstellung entspricht, und das Gehäuseelement (16) anders als der durchscheinende Abschnitt (38, 42) eine der zweiten Farbe entsprechende Farbe aufweist, dass der erste Flächenabschnitt (48, 52) und der zweite Flächenabschnitt (50, 54) des Anzeigeelementes (18) gegenüberliegende radiale Flächenabschnitte von annähernd 90° und der durchscheinende Abschnitt (38, 42) gegenüberliegende radiale Flächenabschnitte von ca. 90° aufweist, und dass das Anzeigeelement (18) in einen oberen und einen unteren Zylinderhalbabschnitt (44, 46) unterteilt ist, mit ersten Flächenabschnitten (48) am oberen Zylinderhalbabschnitt (44), die um 90° gegen die ersten Flächenabschnitte (52) am unteren Zylinderhalbabschnitt (46) versetzt sind, und wobei das Gehäuseelement (16) in einen oberen Zylinderhalbabschnitt (42) und einen unteren Halbabschnitt (34) unterteilt ist, mit gegenüberliegenden durchscheinenden radialen Flächen (38) am oberen Halbabschnitt (32), die um 90° gegen die gegenüberliegenden durchscheinenden radialen Flächen (42) auf dem unteren Halbabschnitt (34) versetzt sind.

2. Ventilvorrichtung mit einem Ventilgehäuse (60), einer in dem Ventilgehäuse (60) angeordneten Ventilspindel (68), einer Ventilscheibe, die zur Drehung zwischen einer für ein Strömungsmittel geöffneten und einer abgesperrten Stellung an der Ventilspindel (68) angeordnet ist, und mit einer Anzeigevorrichtung (10) nach Anspruch 1, dadurch gekennzeichnet, dass das Angeigeelement (18) mit der Ventilspindel (68) derart verbunden ist, dass die ersten schachbrettartig angeordneten Flächenabschnitte (48, 52) des Anzeigeelementes (18) durch den durchscheinenden Abschnitt (38, 42) hindurch sichtbar sind, wenn sich die Ventilspindel (68) in der ersten Betriebsstellung befindet, und dass der zweite schachbrettartig angeordnete Flächenabschnitt (50, 54) des Anzeigeelementes durch den durchscheinenden schachbrettartig angeordneten Abschnitt (38, 42) hindurch sichtbar ist, wenn sich die Ventilspindel (68) in der zweiten Betriebsstellung befindet.

**Revendications**

1. Ensemble formant indicateur de position (10) utilisable avec une vanne rotative visualisant l'orientation opérationnelle d'une vanne rotative (14) comportant une première position opérationnelle et une seconde position opérationnelle correspondant respectivement à une position ouverte et une position fermée par rapport à un écoulement fluide, et pourvu d'un ensemble formant dispositif de commande (12) pour placer la vanne rotative dans les positions opérationnelles précitées, comprenant un élément indicateur de forme cylindrique (18) comportant des première et seconde sections de surface (48, 52; 50, 54), la première section de surface (48, 52) étant pourvue d'un premier moyen indicateur se rapportant à la première position opérationnelle et la seconde section de surface (50, 54) étant pourvue d'un second moyen indicateur se rapportant à la seconde position opérationnelle, l'élément indicateur (18) étant relié à l'ensemble formant dispositif de commande (12) de la vanne rotative, et comprenant un élément d'enveloppe de forme cylindrique (16) comportant des troisième et quatrième sections de surface (36, 40; 38, 42) dont une est constituée d'une section translucide (38, 42) agencée autour de l'élément indicateur (18), la première section de surface (48, 52) de l'élément indicateur (18) étant visible à travers la section translucide (38, 42) lorsque l'ensemble formant dispositif de commande (12) est dans la première position opérationnelle, la seconde section de surface (50, 54) de l'élément indicateur (18) étant visible à travers la section translucide (38, 42) lorsque l'ensemble formant dispositif de commande (12) est dans la seconde position précité, caractérisé en ce que la troisième section de surface (36, 40) est une section indicatrice, la section indicatrice (36, 40) de l'élément d'enveloppe (16) étant pourvue d'un moyen indicateur qui est constitué d'un agencement du type panneau à damier pour coopérer visuellement avec l'un des moyens indicateurs (54, 50) ou (52, 48) de l'élément indicateur (18), qui est un agencement équivalent du type à panneau à damier pour indiquer une position opérationnelle de la vanne rotative, les moyens indicateurs précités des agencements du type à panneau à damier sont des couleurs différentes, une première couleur de la première section de surface (48, 52) correspond à la première position opérationnelle précitée et une seconde couleur de la seconde section de surface (50, 54) correspond à la seconde position opérationnelle précitée et l'élément d'enveloppe (16) autre que la section translucide (38, 42) est d'une couleur correspondant à la seconde couleur, la première section de surface (48, 52) et la seconde section de surface (50, 54) de l'élément indicateur (18) sont formées de portions de surface radiales opposées d'approximativement 90° et la section translucide (38, 42) est formée de portions de surface radiales opposées d'environ 90°, et en ce que l'élément indicateur (18) est divisé en une portion semi-cylindrique supérieure et inférieure (44, 46), les premières sections de surface (48) sur la portion semi-cylindrique supérieure (44) étant décalées de 90° par rapport aux premières sections de surface (52) sur la portion semi-cylindrique inférieure (46) et en ce que l'élément d'enveloppe (16) est divisé en une demi-portion supérieure (32) et une demi-portion inférieure (34), les surfaces radiales translucides opposées (38) sur la demi-portion supérieure (32) étant décalées de 90° par rapport aux surfaces radiales translucides opposées (42) sur la demi-portion inférieure (34).

2. Ensemble formant vanne comprenant une enveloppe de vanne (60), und broche de vanne (68) agencée dans l'enveloppe de vanne (60), un disque de vanne (66) monté à rotation sur la broche de vanne (68) entre une position d'écoulement de fluide ouverte et fermée et un ensemble indicateur (10) tel que défini dans la revendication 1, caractérisé en ce que l'élément indicateur (18) est relié à la broche de vanne (68) d'une manière telle que la première section de surface du type à panneau à damier (48, 52) de l'élément indicateur (18) soit visible à travers la section translucide (38, 42) lorsque la broche de vanne (68) est dans la première position opérationnelle et que la seconde section de surface du type à panneau à damier (50, 54) de l'élément indicateur (18) sont visible à travers la section du type à panneau à damier translucide (38, 42) lorsque la broche de vanne (68) est dans la seconde position.

**0 092 714**

*FIG. 1*

*FIG. 2*

*FIG. 3*

*FIG. 4*